# EUROPEAN PATENT APPLICATION

(11) **EP 2 552 111 A1**
(43) Date of publication of application: **30.01.2013**
(21) Application number: 10848388.4
(22) Date of filing: 25.03.2010
(51) Int. Cl.: H04N 7/173

(54) **INFORMATION PROCESSING PROGRAM, DEVICE, AND METHOD**

(71) Applicant: Fujitsu Limited, Kawasaki-shi, Kanagawa 211-8588 (JP)
(72) Inventor: MATSUNOBU, Miho, Kawasaki-shi Kanagawa 211-8588 (JP)
(74) Representative: Holz, Ulrike
(86) International application number: PCT/JP2010/055211
(87) International publication number: WO 2011/117995

(57) **Abstract**

Information on an event is collected from a video with an announcement of the event, and, when the collected information contains information on an unsettled schedule, the information settled about the schedule is acquired from an external network.

## Description

### FIELD

The present application discloses an information processing program, an information processing apparatus and an information processing method.

### BACKGROUND

Over the recent years, with an advancement of an information processing technology, such a technique has been developed as to search out a specified keyword from a recorded video and acquire information on a content from an external network (refer to, e.g., Patent documents 1 and 2).

### [Patent document]

[Patent document 1] Japanese Laid-Open Patent Publication No.2007-228206
[Patent document 2] Japanese Laid-Open Patent Publication No.2001-307464

### SUMMARY

A television broadcast contains announcements of a new commercial product and a new movie, a start of televising a new program and an announcement of an event such as holding a concert as the case may be. On the occasion of announcing, however, a part of the schedule is not yet settled in some cases.

For example, in the case of the announcement of the movie, information on a releasing date of the movie can be known on site, however, other items of information such as a releasing period (an ending date of the release) of the movie, a sale date of a DVD of the movie and a starting date of a rental of the DVD are unknown in many cases. Further, it is often that the sale of the DVD and the start of the rental of the DVD take several months since the movie was released, and hence available information is only ambiguous information that is not yet settled at the point of time when announcing the movie. As a result, it might happen that the movie itself will have been forgotten when selling the DVD and starting the rental of the DVD.

Under such circumstances, it is an object of the present application to provide an information processing program, an information processing apparatus and an information processing method which appeal, when an unsettled schedule gets settled, this purport to a user.

The present application discloses the following computer program in order to solve the problems.

An information processing program is a program for making a computer execute:
a process of collecting information on an event from a video with an announcement of the event; and
a process of acquiring, when the collected information contains information on an unsettled schedule, the information settled about the schedule from an external network.

It is to be noted that the information processing program can be grasped from aspects of an information processing apparatus and an information processing method.

### [Effects of the invention]

It is possible to appeal to the user that the unsettled schedule gets settled.

### BRIEF DESCRIPTION OF THE DRAWINGS

FIG.1 is a diagram illustrating one applied example of an embodiment;
FIG.2 is a diagram of a configuration of an information processing apparatus;
FIG.3 is a block diagram of functions realized by the information processing apparatus;
FIG.4 is a flowchart of processes executed by a video extraction unit;
FIG.5 is a diagram of one example of a keyword table;
FIG.6 is a diagram of one example of information extracted by the video extraction unit;
FIG.7 is a diagram of one example of a database input status list;
FIG.8 is a flowchart of processes executed by an input function unit;
FIG.9 is a diagram of one example of a list window;
FIG.10 is a diagram of one example of a setting window;
FIG.11 is a diagram of one example of a detailed setting window;
FIG.12 is a diagram of one example of a post-setting database input status list;
FIG.13 is a flowchart of processes executed by an information management unit;
FIG.14 is a diagram of one example of an information collection list;
FIG.15 is a flowchart of processes executed by the information collection unit;
FIG. 16 is a diagram of one example of a webpage related to news article of a movie;
FIG.17 is a diagram of one example of a post-updating database input status list; and
FIG.18 is a diagram illustrating a modified example of functional blocks realized by the information processing apparatus.

### DESCRIPTION OF EMBODIMENTS

Embodiments of an information processing program, an information processing method and an information processing apparatus, which are disclosed in the present application, will hereinafter be described. The embodiments, which will be given as follows, are exemplifications of the information processing program, the information processing method and the information processing apparatus each disclosed in the present application, and the scope of the right of the present application is not limited to the embodiments given below.

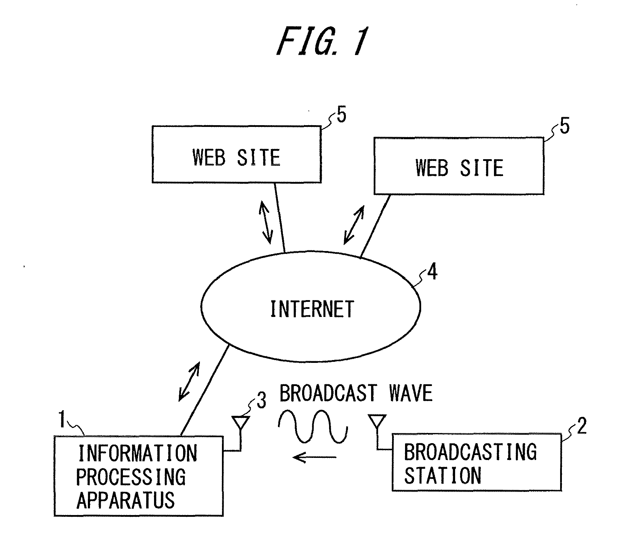

FIG. 1 is a diagram illustrating one example of how the embodiment is applied. An information processing apparatus 1 defined as one aspect of the information processing apparatus disclosed in the present application is, as depicted in FIG. 1, capable of receiving broadcast waves broadcasted from a broadcasting station 2 by an antenna 3 and accessing a Web site 5 via the Internet.

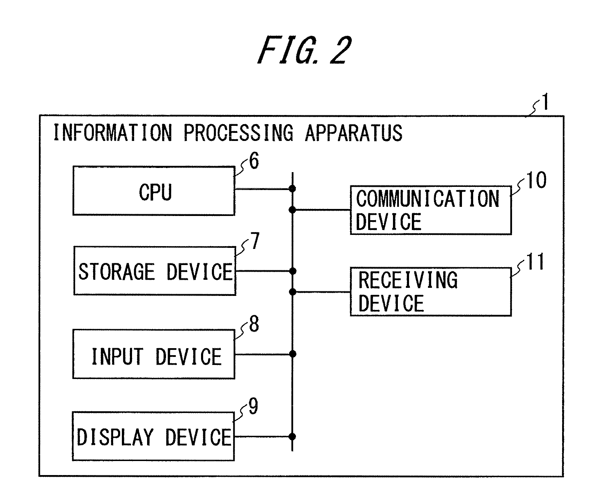

FIG. 2 is a diagram of a configuration of the information processing apparatus 1. The information processing apparatus 1 is a so-called personal computer and includes, as depicted in FIG. 2, a CPU (Central Processing Unit) 6, a storage device 7 having a hard disk, a memory, etc, an input device 8 that receives connections of a keyboard, a mouse, etc and thereby accepts a user's operation, a display device 9 such as a liquid crystal display, a communication device 10 connected to the Internet 4 and a receiving device 11 that receives a connection of the antenna 3 and is thereby capable of receiving the broadcast waves broadcasted from the broadcasting station 2. Further, the information processing apparatus 1 may include another unillustrated storage device that accesses a portable recording medium and enables information to be read therefrom and written thereto. These components building up the information processing apparatus 1 are connected to a bus so as to enable instructions and data to be received and transferred.

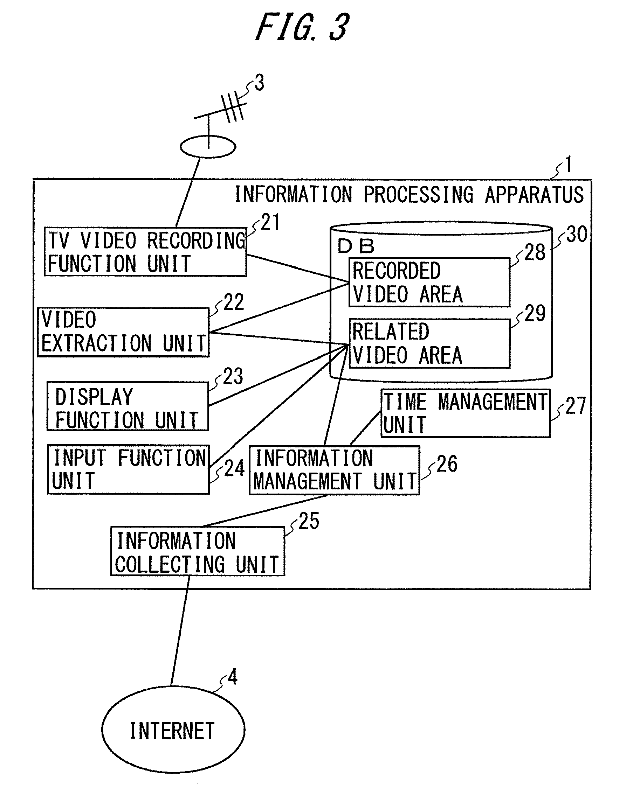

FIG. 3 is a functional block diagram illustrating a variety of functions realized by the information processing apparatus 1. The information processing apparatus 1, upon executing an information processing program according to the embodiment that is stored in the storage device 7, realizes the variety of functions as illustrated in FIG. 3 through cooperative operations of the CPU 6, the storage device 7, the input device 8, the display device 9, the communication device 10 and the receiving device 11. Namely, the information processing apparatus 1, when the CPU 6, upon power-on, executes an operating system (OS) stored in the storage device 7, comes to a status enabled to execute the variety of computer programs. Herein, when instructed by the user's operation to execute the information processing program, the CPU 6 sequentially reads, interprets and executes commands of the information processing program stored in the storage device 7, thus processing the information. A TV video recording function unit 21, a video extraction unit 22, a display function unit 23, an input function unit 24, an information collection unit 25, an information management unit 26, a time management unit 27 and a database 30 including a recorded video area 28 and a related video area 29 are thereby realized within the information processing apparatus 1.

Incidentally, FIG. 3 illustrates the variety of function blocks in the way of being simultaneously realized for the sake of explanatory convenience, however, these function blocks are not necessarily realized at the same time. Further, the information processing apparatus 1 is not limited to the personal computer but may be whatever apparatus connectable to the Internet when capable of realizing these function blocks by executing the computer programs and is exemplified by a TV receiver and a video recorder each having a built-in hard disk, a mobile information device such as a mobile phone and a portable TV set and any other types of information processing apparatuses each incorporating a TV recording function.

The TV video recording function unit 21 is the function unit that takes charge mainly of a process for recording a broadcast program of which a broadcast date/time and a program name are set arbitrary by the user on the storage device 7. Note that the videos recorded by the TV video recording function unit 21 may be those available by whatever means when being of programs broadcasted from the broadcasting station 2. Namely, in the embodiment, the programs are recorded by receiving the broadcast waves which are wirelessly transmitted from the broadcasting station 2, however, for instance, the programs may be broadcast programs provided through the Internet line and a line via a communication satellite and by other any types of means.

The video extraction unit 22 is the function unit that takes charge mainly of a process for analyzing the video of the broadcast program recorded on the storage device 7 and extracting a specified character string etc contained in the video. Note that the video analyzed by the video extraction unit 22 is not limited to the video recorded by the TV video recording function unit 21. The video extraction unit 22 may be what analyzes the video recorded on, e.g., a portable medium and may also be what analyzes the video inputted from an unillustrated external input terminal provided in the information processing apparatus 1. The portable medium can be exemplified by a rental DVD etc recorded with an announcement of an event such as a movie and a concert. The information processing apparatus 1, when the video extraction unit 22 adopts a configuration for analyzing the video inputted from the portable medium and the external input terminal, can omit the TV video recording function unit 21 and the receiving device 11.

The display function unit 23 is the unit that takes charge mainly of a process of generating and displaying a variety of setting window and display windows. Note that the display function unit 23 may be what displays the window on the liquid crystal display etc serving as the display device 9 built in the information processing apparatus 1 and may also be what displays a picture on the display device etc connected to the outside by use of video signals that are output from an unillustrated video output terminal provided in the information processing apparatus 1.

The input function unit 24 is the function unit that takes charge mainly of a process of accepting a variety of user's operations.

The information collection unit 25 collects various categories of information by accessing multiple Web sites via the Internet 4.

The information management unit 26 sorts out the necessary information by accessing the related video area 29 and saves the collected information in the database 30.

The time management unit 27 is the function unit that periodically transmits the signals to the information management unit 26, and transmits at periodically set points of time such as a specified date/time in every month, a specified day in every week or other specified date/time. When an interval of the signals transmitted from the time management unit 27 to the information management unit 26 is short and when the not-yet-established information is established, this information can be early acquired.

The database 30 saves data of contents such as the videos and sounds (voices) of the broadcast programs and also saves the various categories of information.

Next, a series of information processes for realizing the respective function units will be described.

An assumption is that an information processing program is started up, and the TV video recording function unit 21 starts recording the broadcast program broadcasted from the broadcasting station 2. The TV video recording function unit 21 saves, in the recorded video area 28, the data of the content such as the video and the sound of the broadcast program broadcasted from the broadcasting station 2, thus recording the broadcast program. Note that whatever trigger may be available for the TV video recording function unit 21 to start recording, for instance, the recording is started when the user presses a "record start" button, when reaching the date/time at which the user reserved the recording, or when starting the program of a category or a genre congenial to a liking of the user.

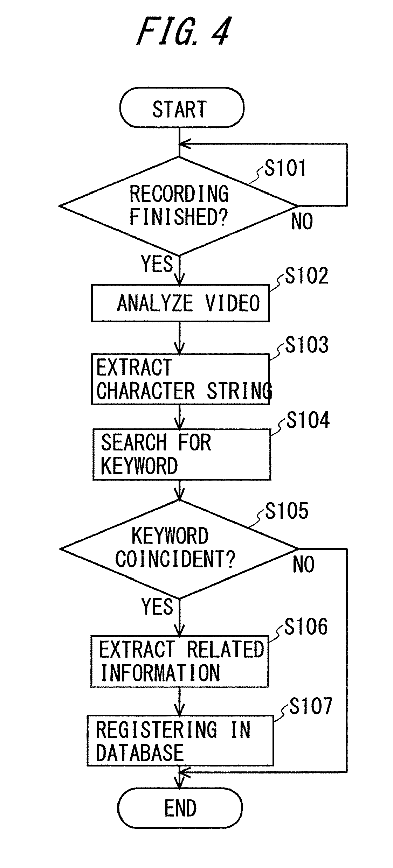

When the TV video recording function unit 21 has recorded the broadcast program, the video extraction unit 22 analyzes the recorded video, then collects the various categories of information and starts executing the process of registering the information in the database. FIG. 4 is a flowchart of the processes executed by the video extraction unit 22.

The video extraction unit 22 detects whether the recording of the broadcast program, which is executed by the TV video recording function unit 21, is finished or not (S101). This is because the TV video recording function unit 21 and the video extraction unit 22 are prevented from simultaneously accessing a file stored with the content data of the broadcast program. The video extraction unit 22, upon detecting that the recording of the broadcast program, which is executed by the TV video recording function unit 21, is finished, analyzes the video of the broadcast program saved in the recorded video area 28 (S102).

The video extraction unit 22 executes analyzing the video of the broadcast program as follows. The video extraction unit 22 separates a character string area from a background area of the picture of each of frames configuring the video according to a color difference etc, and sequentially compares an image of the character cut out from the character string area with a character pattern that is stored beforehand.

The video extraction unit 22 extracts, as the character string, such an arrangement of the characters that the images of the characters cut out from the character string area match with the character patterns stored beforehand in the video analysis (S103). The video extraction unit 22 temporarily saves the extracted character string in the storage device 7.

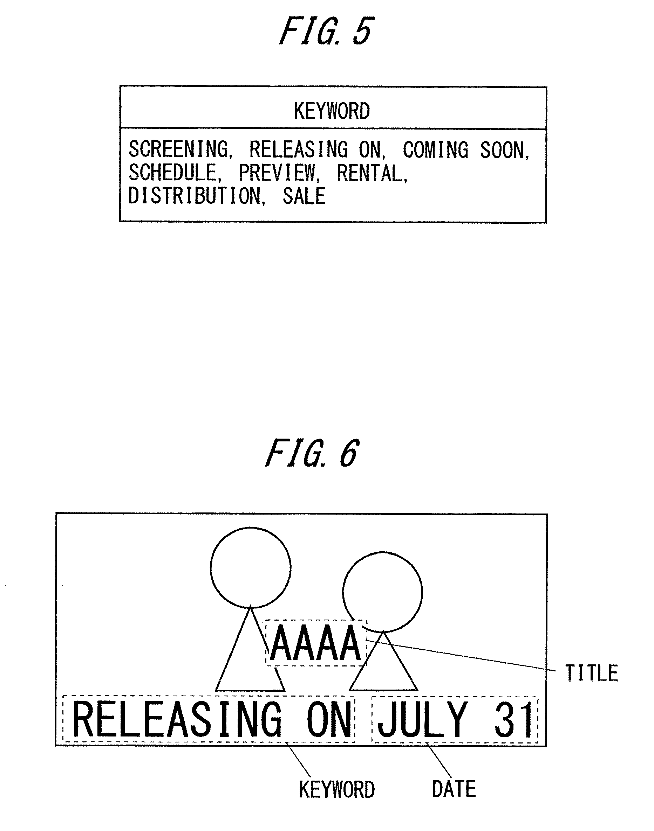

The video extraction unit 22, when completing the extraction of the character string with respect to the picture of each of the frames configuring the video of the broadcast program, determines whether or not the extracted character strings contain the character string matching with a predetermined keyword (S104). The predetermined keyword is the character string defined by a keyword table stored previously in the storage device 7 as well as being the character string that recalls an announcement of the event, e.g., the character string in the keyword table as illustrated in FIG. 5. Herein, the event includes a variety of events announced in the broadcast programs, which can be exemplified by, e.g., a release of the movie, a sale of a rental video, a sale of game software, an autograph session and a concert. The video extraction unit 22 searches for the character strings extracted by the process in S103, and checks whether or not these character strings contain the character string matching with the predetermined keyword defined by the keyword table. The video extraction unit 22 finishes the series of processes when the extracted character strings do not contain the character string matching with the predetermined keyword, but starts the following processes whereas when contained (S105).

The video extraction unit 22, when the extracted character strings contain the character string matching with the predetermined keyword, extracts the information related to this keyword (S106). The information related to this keyword is the information related to a content implied by the keyword and exemplified such as information on character strings displayed in the periphery of the character string matching with the predetermined keyword and information on character strings displayed in the frames before and after the frame in which the character string matching with the predetermined keyword is displayed. The video extraction unit 22 deems the character string existing in the vicinity of the predetermined keyword to be the information related to the keyword, and extracts this character string as the information related to the keyword. As a result, it follows that pieces of information related to the event announced in the video are collected.

FIG. 6 illustrates one example of the information extracted by the video extraction unit 22 as the information related to the keyword. In the case of the video (picture) depicted in FIG. 6, the character string matching with the keyword contains a character string "Release". The video extraction unit 22 extracts a character string of a title of the movie and a character string of a date from the character strings in the vicinity of "Release" matching with the keyword by way of the information related to the keyword. The video extraction unit 22, after finishing the extraction of the information related to the keyword, saves the extracted information in the database 30 (S107).

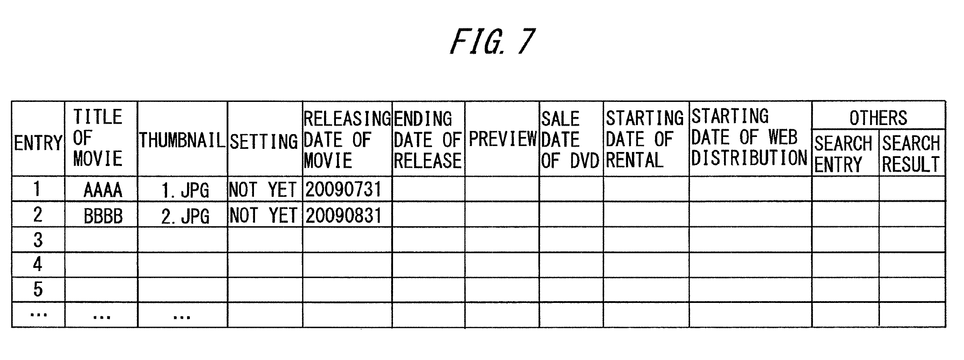

FIG. 7 illustrates on example of the data saved by the video extraction unit 22 in the database 30. The video extraction unit 22 saves, as depicted in FIG. 7, the information extracted from the recorded video as a database input status list in the related video area 29 of the database 30 together with a file name of a thumbnail of the video to which the extracted information is written. It is assumed that the broadcast program recorded by the TV video recording function unit 21 contains, e.g., CMs (Commercial Messages) giving the announcements of the releases of two movies. The CM can be detected by use of "Switchover of sound" such as a border between music and a conversation. Contents saved in the related video area 29 by the video extraction unit 22 are, as illustrated in FIG. 7, "Title of movie" ("AAAA" or "BBBB"), a file name of "Thumbnail" ("1.JPG" or "2.JPG") of the announced video of each movie, and a "releasing date" ("20090731" or "20090831") of each movie. Note that it is specified based on the content of the keyword whether the date information extracted by the process in S106 described above is the releasing date of the movie or not. Namely, in the process of S106 described above, the information is coincident with the keyword "Release", and hence it is apparent that the date information in the information related to this keyword implies the releasing date. The video extraction unit 22, when the coincident character strings are "Rental" and "Schedule", deems the date information in the information related to these character strings to be information on "Starting date of rental", and saves this date information in the related video area 29 of the database 30. The video extraction unit 22, on the occasion of saving the information in the related video area 29 of the database 30, includes a map containing definitions of correlations between the keywords given in the keyword table and the respective entries of the database input status list in FIG. 7 in order to specify which entry in the database input status list in, e.g., FIG. 7 the information on the keyword extracted in S106 is related to, and specifies based on this map the correlation between the extracted information and each entry in the list.

Through the operation described above, the series of processes executed by the video extraction unit 22 come to an end.

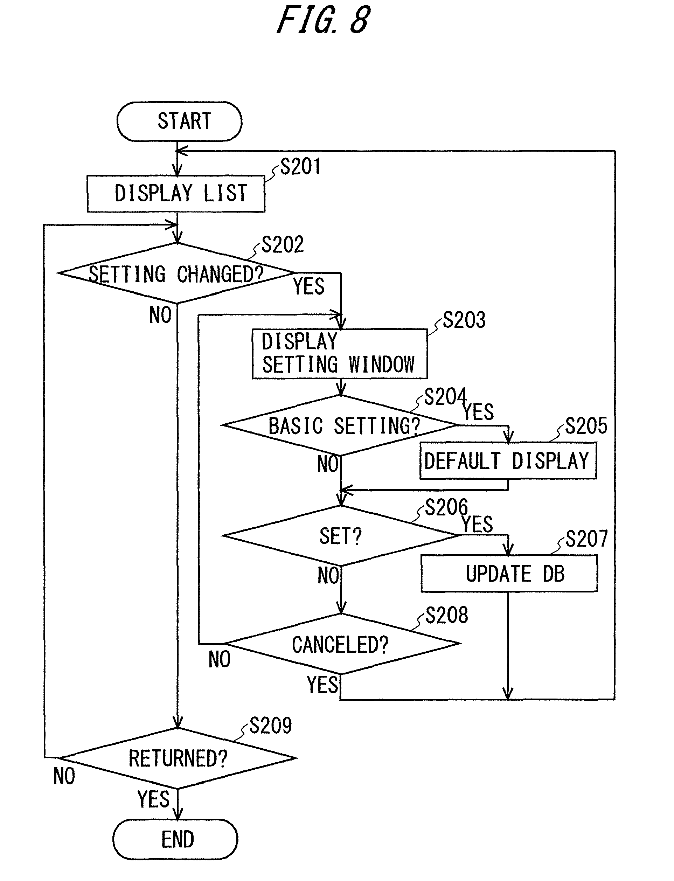

Herein, an assumption is that the user, who desires to check the contents of the information contained in the recorded video, performs, on the input device 8, an operation for opening the window on which to check the contents of the collected information and check the setting statuses, and the input function unit 24 detects this operation. Then, the input function unit 24 executes the following processes. FIG. 8 is a flowchart of the processes executed by the input function unit 24.

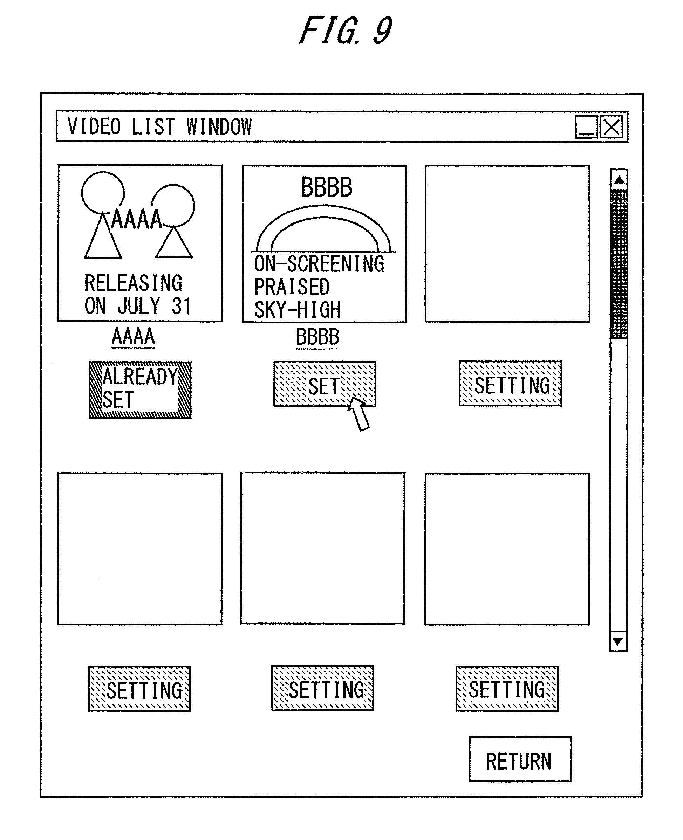

The input function unit 24 accesses the database input status list of the database 30 and generates an announced video list window on the basis of the file names of the thumbnails of the announced videos (S201). The list window generated by the input function unit 24 is displayed by the display function unit 23. FIG. 9 illustrates one example of the list window to be displayed. The file names of the thumbnails of the two movies ("AAAA" and "BBBB") are saved in the related video area 29, and therefore the input function unit 24 generates, as illustrated in FIG. 9, the window on which the thumbnails of these two movies are arranged. Picture files associated with the file names of the thumbnails saved in the related video area 29 are obtained by referring to the recorded video area 28.

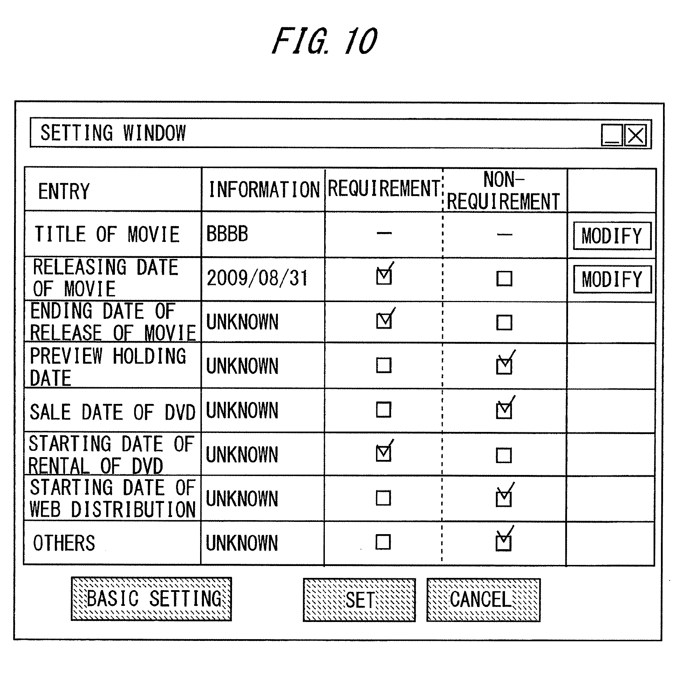

Herein, the user, who exhibits an interest in any one of the thumbnails, presses a "setting" button on the window, at which time the input function unit 24 generates a window for setting a requirement/non-requirement of the information and the collection of the information related to the movies indicated by the thumbnails on the basis of the data saved in the related video area 29 (S202). The setting window generated by the input function unit 24 is displayed on the display device 9 by the display function unit 23 (S203). FIG. 10 depicts one example of the setting window to be displayed. When the user presses the "setting" button of the movie "BBBB" , the input function unit 24 accesses the related video area 29 and generates the setting window as illustrated in FIG. 10 by acquiring the information related to this movie. As illustrated in FIG. 7, at the present point of time, with respect to the movie "BBBB", only the information of the releasing date of the movie is saved. Hence, as depicted in FIG. 10, only the information on the releasing date of the movie is displayed on the setting window generated by the input function unit 24 at the present point of time, and other entries remain unknown irrespective of whether the schedule is settled or not. As illustrated in FIG. 10, the setting window generated by the input function unit 24 is provided with check boxes for setting the requirement/non-requirement of the information with respect to the respective entries.

Herein, when pressing a "basic setting" button on the setting window (S204), the input function unit 24 displays the setting window with defaults checked for the setting of the requirement/non-requirement of the information about the respective items (S205). The defaults are preset when manufacturing the information processing apparatus 1, and whatever default setting is available when saved in the storage device 7, the setting being such that "required" is checked in only the items (e.g., the releasing date of the movie and the sale date of the DVD) that are generally desired by the users, or "required" is checked in all the items.

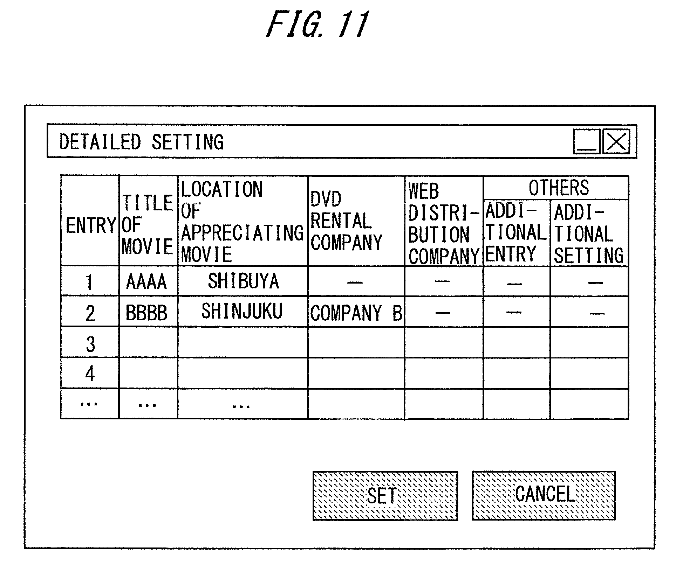

Further, when pressing the "setting" button on the setting window depicted in FIG. 10 (S206), the input function unit 24 saves the information on the requirement/non-requirement set about the respective items in the database input status list of the database 30 (S207). Note that the input function unit 24, upon pressing the "setting" button on the setting window depicted in FIG. 10, before saving in the database input status list, may generate a detailed setting window as in FIG. 11 and accept the detailed settings such as a location of a movie theater and a name of a rental company about which pieces of information should be collected.

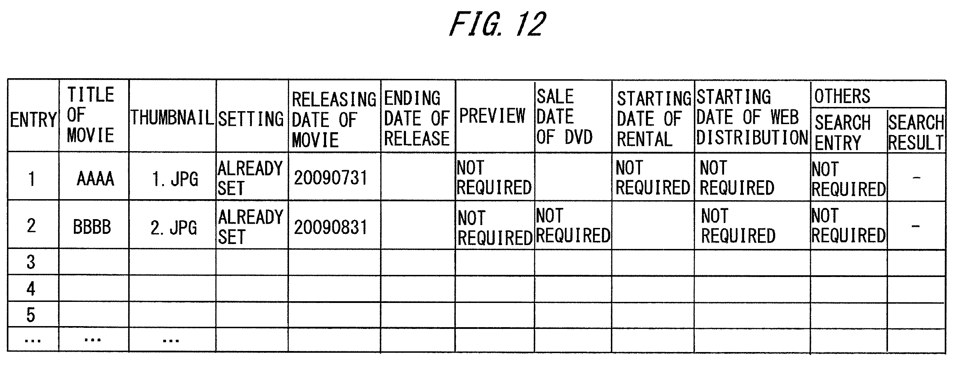

The information on the requirement/non-requirement about the respective items saved in the related video area 29 is the default checked in the check box by pressing the "basic setting" button or is arbitrarily checked by the user. FIG. 12 depicts one example of the database input status list after the information on the requirement/non-requirement about the respective items has been set and saved therein. As depicted in FIG. 12, the items of information with "not required" checked on the setting window in FIG. 10 are saved with a purport that the information is unrequired in the database input status list.

When executing the process in S207 or pressing a "cancel" button on the setting window illustrated in FIG. 10, the input function unit 24 again generates the announced video list window (S201) . The input function unit 24, when the "setting" button of any one of the movies is pressed on the setting window illustrated in FIG. 9 (S202), re-executes the processes from S203 onwards as described above. While on the other hand, the input function unit 24, when a "return" button is pressed on the setting window illustrated in FIG. 9 (S209), closes the announced video list window and finishes the flow of the series of processes illustrated in FIG. 8.

Through the operation described above, the series of processes executed by the input function unit 24 come to an end.

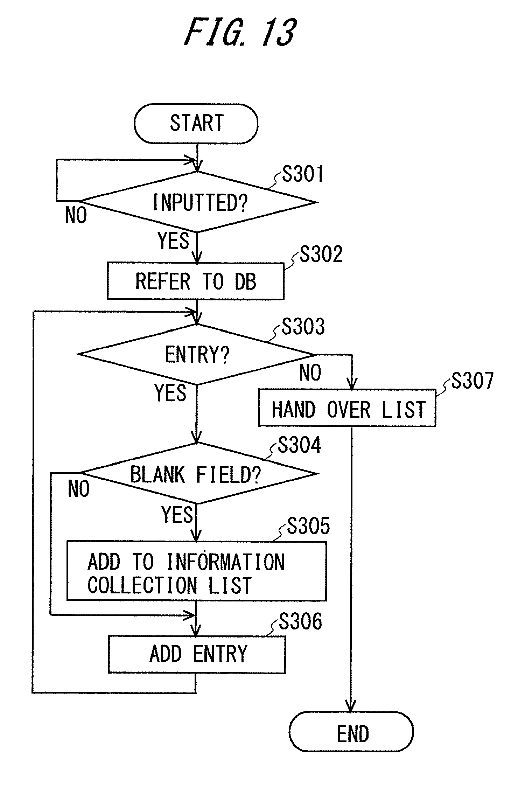

By the way, the information processing program according to the embodiment is executed, during which the information management unit 26 executes the following processes. FIG. 13 is a flowchart of the processes executed by the information management unit 26.

The information management unit 26, when the input function unit 24 executes the process in S207 or when the signal is inputted from the time management unit 27 (S301), refers to the database input status list saved in the related video area 29 (S302). Then, the information management unit 26 checks whether or not there is the entry registered with the information such as the title of the movie (S303).

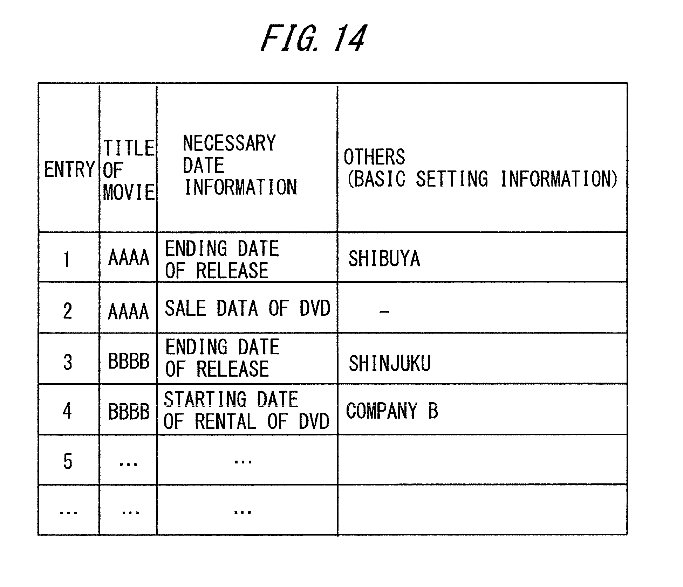

In the case of the database input status list illustrated in FIG. 12, the pieces of information are saved in the entry 1 and the entry 2, and therefore the information management unit 26 determines the status to be "entered". The information management unit 26, when the database input status list contains the entry saved with the information, next checks whether the entry has any blank field or not (S304). When there is no blank field, the information management unit 26 adds "1" to a parameter of the search target entry in order to check the information saved in the next entry (S306), and again executes the processes from S303 onwards. Whereas when the blank field exists, the information management unit 26 adds a content of the information that needs collecting due to the blank field in the entry to an information collection list (S305), and executes the processes from S306 onwards. FIG. 14 illustrates one example of the information collection list generated by the information management unit 26. The processes in S303 through S306 are repeated, thereby listing the information that corresponds to the blank field in the database input status list and needs collecting.

The information management unit 26, when the entries saved with the information disappear (S303), hands over the information collection list to the information collection unit 25 (S307). For example, when the database input status list is in the status where the entries down to the second entry are saved with the information as illustrated in FIG. 12, the information management unit 26 determines that the entries saved with the information disappear at a point of time when finishing adding the content of the information of the blank field next to "BBBB" in the "movie title" field of the second entry, and hands over the information collection list to the information collection unit 25.

Through the operation described above, the series of processes executed by the information management unit 26 are finished. With the series of processes executed by the information management unit 26, there is listed the information on the schedule remaining unknown or unsettled with respect to the announcements of the variety of events contained in the TV video recorded by the TV video recording function unit 21.

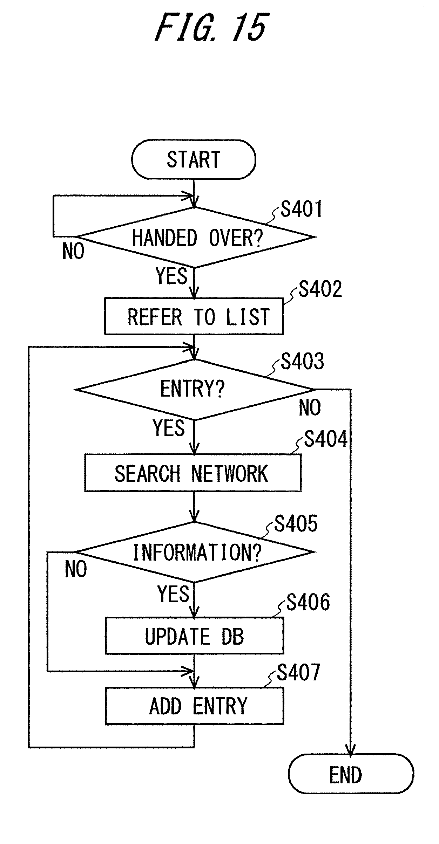

Next, the processes executed by the information collection unit 25 will be described. The information collection unit 25, when the information collection list is handed over from the information management unit 26, executes the following processes. FIG. 15 is a flowchart of the processes executed by the information collection unit 25.

The information collection unit 25, when the information collection list is handed over from the information management unit 26 (S401), refers to this list (S402). Then, the information collection unit 25 checks whether or not there is the entry of the information that should be collected (S403). The information collection unit 25, when there is the entry of the information that should be collected, searches whether this information exists on the Internet 4 or not (S404). For example, as illustrated by the information collection list exemplified in FIG. 14, when an ending date of the release about the movie "AAAA" is given as the information that should be collected, the search is carried out by using the title name of the movie "AAAA" and the "ending date of the release" thereof as search keys.

Note that the information collection unit 25 may acquire the information by accessing the specified Web site 5 that is preset as an access destination on the occasion of searching for the information, and may also acquire the information by accessing the unspecified Web site 5. The specified Web site 5 is a Web site of a database server stored with the movie information such as the releasing date, the ending date of the release, a name of the cinema of the released movie, the cast and a year of the filmmaking of the movie, and the information collection unit 25 collects the information given as the should-be collected information in the information collection list by accessing the database server stored with these pieces of movie information. The access to the Web site 5 is made based on, e.g., a URL (Uniform Resource Locator) list prepared beforehand.

Note that the method of acquiring the information by accessing the unspecified Web site 5 can be exemplified as follows. For instance, in the case of a webpage on which news articles are written, the information is written such as "Released on XX Day in XX Month", "Releasing Date: XX Day, XX Month, XXXX Year" and "Releasing Date is determined to be XX Day in XX Month" in many cases. Such being the case, the information collection unit 25, when the keyword related to the unknown information, i.e., the unknown information is the information is the information on the releasing date of, e.g., the movie "AAAA", analyzes the webpage searched out by using "Releasing date" as the keyword for the search and, when the date information is contained in 15 characters before and after "Releasing", deems the date information to be the releasing date. Supposing that there as two or more pieces of date information, the date information nearest in the number of characters to the character "Releasing" is deemed to be the information of the releasing date of the movie. Further, when a plurality of dates each considered as the releasing date is detected from one webpage, the date containing the largest number of characters is deemed to be the releasing date. This is the same with respect to the ending date of the release, the sale date of the DVD, the starting date of the rental, etc. As for the keyword on the occasion of executing the search on the Internet 4, the keywords related to the respective entries of the database input status list are defined on an entry-by-entry basis in a default table.

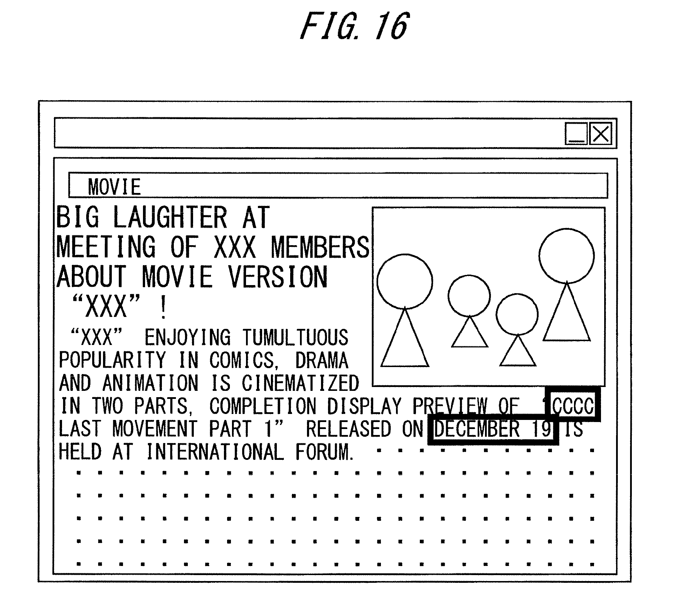

FIG. 16 illustrates one example of the webpage pertaining to the news articles of the movie. The information collection unit 25, when the releasing date of a movie "CCCC" is given as the should-be collected information in the information collection list, analyzes the webpage in FIG. 16 that is searched out by use of the title "CCCC" and "Releasing date" of the movie as the search keys, and deems "December 19" in front of the character "Releasing" to be the information of the releasing date of the movie.

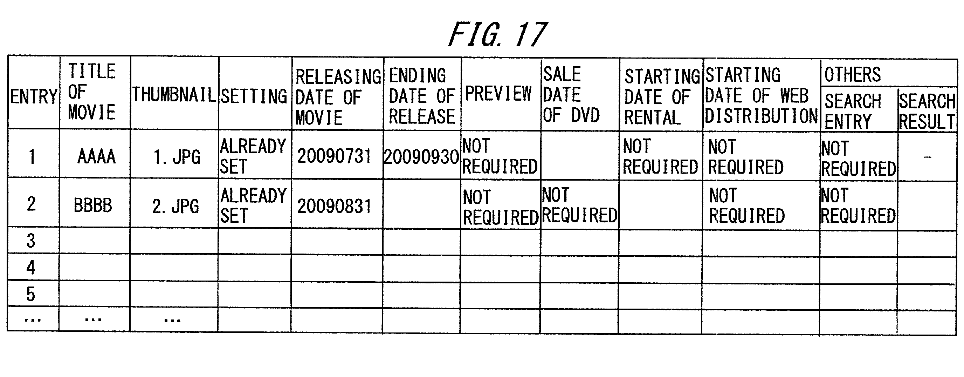

The information collection unit 25, when the information is detected in any one of the Web sites 5 (S405), hands over the information to the information management unit 26 and updates the database input status list of the database 30 (S406). FIG. 17 illustrates the updated database input status list. When the database input status list is updated, e.g., as depicted in FIG. 17, there is added the information of the ending date of the release of the movie "AAAA", which is given as the should-be collected information in the information collection list.

The information collection unit 25, upon updating the database input status list, adds an entry number set as a search target of the information collection list of the should-be collected information (S407), and again executes the process in S403. Whereas when the information is not detected from any Web site 5 (S405), the information collection unit 25 adds the entry number as the search target of the information collection list of the should-be collected information without updating the information collection list of the database 30 (S407), and again executes the process in S403.

The information collection unit 25 sequentially executes the searches for the information about the respective entries of the information collection list and, upon finishing the searches for the information about all the entries, terminates the processes in S401 through S407.

In the information processing apparatus 1, the information not yet settled at the point of time when the user desires to obtain is collected through the cooperative operations of the TV video recording function unit 21, the video extraction unit 22, the display function unit 23, the input function unit 24, the information collection unit 25, the information management unit 26, the time management unit 27 and the database 30. Hence, the user opens the window illustrated in FIG. 10 by pressing the "setting" button from on the thumbnail window of the movie depicted in FIG. 9, and can check the information that was not yet settled before. Therefore, the user can surely know the unsettled information afterward without overlooking that the user could not know when desiring to know. Further, the user can acquire the unsettled information, without periodically searching by himself or herself, that the user could not know when desiring to know, and can therefore obviate the time-consuming operations for obtaining the unsettled information.

Namely, the user viewing the video can, when thinking of desiring to get, set the requirement/non-requirement for the search for the information immediately on site irrespective of whether or not there exists the settled information on the schedule about this information. Therefore, this setting enables the user to acquire the information over such a long period of time as to allow the user to forget and omits such a time-consuming operation that the user collects the information by himself or herself.

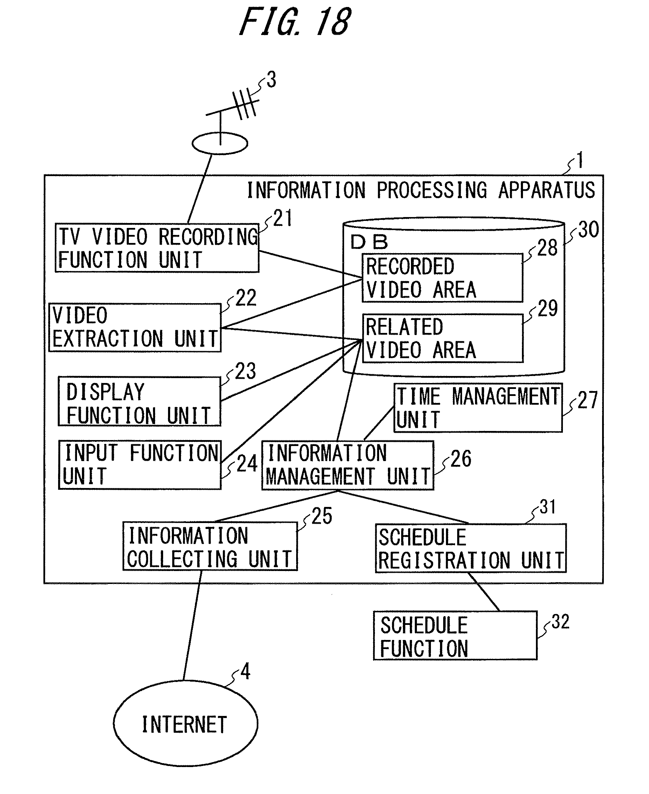

Note that the information processing program executed by the information processing apparatus 1 may be what further generates a schedule registration unit 31 as illustrated in FIG. 18. The schedule registration unit 31 is a function unit that transfers the date information to an external schedule function 32 which displays a schedule on a user's individual webpage provided by logging in a specified Web site or displaying the schedule on a mobile information device etc.

The schedule registration unit 31, when the information collection unit 25 transfers the date information to the information management unit 26, notifies the external schedule function 32 of this date information. The external schedule function 32 adds the date information transferred from the schedule registration unit 31 to the schedule. For example, the external schedule function 32 is assumed to be the mobile information device, and, when the information collection unit 25 transfers the information of the ending date of the release of the movie "AAAA" to the information management unit 26 as described above, this information is added to a schedule book of the mobile information device. The schedule registration unit 31 notifies the user's individual webpage or the mobile information device of the date information, which is realized via the Internet 4 by use of the communication device 10.

When being the present modified example, the user can immediately know the unsettled information afterward without operating the information processing apparatus 1 that the user could not know when thinking of desiring to know.

Further, the discussions on the embodiment and the modified example have been made by taking the information on the movie for example, however, other available examples may deal with information on a game or information on a convert and a musical. In the case of dealing with the information on the game, the entries given in the database input status list are exemplified such as "a sale date of the game", "a sale date of a strategy guide book of the game" and "a publisher of the strategy guide book". Moreover, in the case of dealing with the information on the concert and the musical, the entries given in the database input status list are exemplified such as "an open date/time of the concert (musical)", "a sale date of the ticket (a buy-ticket method)", "a sale date of goods" and "an address (or phone number) of information site for selling the ticket".

Furthermore, in the embodiment and the modified example, the information processing apparatus 1 acquires the information on the settled schedule that has remained unknown or unsettled so far by accessing the Web site 5 on the Internet 4, however, the configuration may be, e.g., modified as follows. To be specific, a specified server on the Internet 4 is made to execute the function realized by the information collection unit 25. The information management unit 26 of the information processing apparatus 1, after generating the information collection list upon receiving the signals from the time management unit 27, accesses the Web site 5 possessed by this server and transfers the information collection list to the server. The server receiving the information collection list executes the series of processes in S401 through S407 illustrated in FIG. 15. The server, when the information is detected on any one of the Web sites 5, transfers the information to the information management unit 26 via the Internet 4. When being the modified example such as this, the process of searching for the specified information on the Internet 4 is realized by the server, and it is therefore feasible to reduce the load on the information processing apparatus 1. Further, the server side can be also made to execute a high-level information searching process and information analyzing process that cannot be processed by the capability possessed by the information processing apparatus 1.

By the way, the database input status list and the information collection list, which are generated in the information processing apparatus 1, are useful information also in the manufacturer according to the embodiment. The entries of the information not available by the user in spite of their desiring to obtain are given in the database input status list and the information collection list, and hence the third party other than the user, when analyzing these lists, can grasp what type of information the user wants to get. When configured so that these lists can be transmitted to the third party from the information processing apparatus 1, the third party analyzing the lists can grasp what type of event the user gets interested in and can therefore acquire predictive data etc of a demand for performance of the event. Further, when the manufacturer according to the embodiment can analyze these lists, it is feasible to optimize, as the majority of users request, the keywords and the entries of the database input status list that are set as the defaults.

It should be noted that the information processing program according to the embodiment and the respective modified examples may be recorded on a non-transitory computer readable recording medium. The computer is made to read and execute the program on this recording medium, whereby the respective functions can be provided. Herein, the non-transitory computer readable recording medium connotes a recording medium capable of accumulating the information such as data and programs electrically, magnetically, optically, mechanically or by chemical action, which can be read from the computer etc. Among these recording mediums, for example, a flexible disc, a magneto-optic disc, a CD-ROM, a CD-R/W, a DVD, a DAT, an 8 mm tape, a memory card, etc are given as those removable from the computer. Further, a hard disc, a ROM (Read-Only Memory), etc are given as the recording mediums fixed within the computer etc.

Moreover, the information processing program may be received from another apparatus via the communication device 10. The thus-received information processing program may be, after being temporarily stored in an auxiliary storage device such as a hard disk serving as the storage device 7, loaded into a main storage device such as a memory serving as the storage device 7 and then executed by the computer. Further, the thus-received information processing program may be, without being stored in the auxiliary storage device, loaded into the main storage device and then executed by the computer.

## Claims

1. An information processing program for making a computer execute:
a process of collecting information on an event from a video with an announcement of the event; and
a process of acquiring, when the collected information contains information on an unsettled schedule, the information settled about the schedule from an external network.

2. The information processing program according to claim 1, wherein the computer is made to execute a process of acquiring, when the collected information contains the information on the unsettled schedule and when the information settled about the schedule is searched out by periodically searching the external network, the searched-out information settled about the schedule from the external network.

3. The information processing program according to claim 1 or 2, wherein the computer is made to execute a process of acquiring, when the collected information contains the information on the unsettled schedule, the information settled about the schedule on the basis of a keyword related to the schedule by searching the external network.

4. The information processing program according to any one of claims 1 through 3, wherein the computer is made to further execute a process of registering, when the information settled about the schedule is acquired from the external network, the information settled about the schedule to a schedule of a user.

5. An information processing apparatus comprising:
a collecting unit to collect information on an event from a video with an announcement of the event; and
an acquiring unit to acquire, when the collected information contains information on an unsettled schedule, the information settled about the schedule from an external network.

6. An information processing method executed by a computer, comprising:
collecting information on an event from a video with an announcement of the event; and
acquiring, when the collected information contains information on an unsettled schedule, the information settled about the schedule from an external network.
